# EUROPEAN PATENT SPECIFICATION

(11) **EP 2 451 107 B1**
(45) Date of publication and mention of the grant of the patent: **12.06.2013**
(21) Application number: 10306220.4
(22) Date of filing: 08.11.2010
(51) Int. Cl.: H04L 1/00, H04L 1/18

(54) **Method and arrangement for extracting information from signals in receivers**
Verfahren und Anordnung zum Extrahieren von Informationen aus Signalen in einem Empfänger
Procédé et agencement d'extraction d'information à partir de signaux dans des récepteurs

(43) Date of publication of application: 09.05.2012
(73) Proprietor: Alcatel Lucent, 75007 Paris (FR)
(72) Inventor: Valentin, Stefan, 70378 Stuttgart (DE)
(74) Representative: ALU Antw Patent Attorneys

(56) References cited:
- EP-A2- 1 617 597
- EP-A2- 1 926 243
- WO-A1-02/37743
- US-A1- 2005 235 190
- US-A1- 2008 037 670

## Description

The present invention relates to a method and arrangement for extracting information from at least two received signals.

Signal combining is widely used to provide diversity and energy gains at the receiver. Signal combining, as the expression suggests, involves the combination of at least two signals, carrying similar information, but received via different realizations of the channel, e.g. by retransmission over a different antenna or during a different time slot. Both signals are combined in order to increase the quality of the estimated information extracted from the different signals.

As a retransmission is involved, the first received signal generally has to be buffered until receipt of the retransmitted signal. This however may introduce a significant delay, unnecessarily reducing the performance of the overall transmission.

In the published European Patent Application EP 1 617 597 the occurrence of reception errors due to failure to discriminate between a new transmission and a retransmission is reduced by a wireless communication device comprising a storage unit operable to store received data; and a decoding unit operable to obtain a first decoding result by decoding new received data, which is not combined with the stored received data, and which obtains a second decoding result by decoding the new received data, which is combined with the stored received data.

It is therefore an object of embodiments of the present invention to provide a method and arrangement for extracting information from a first received signal and a second received signal, by using a combination of both signals, but which is much faster than the traditional methods.

In accordance to embodiments of the present invention, this object is achieved by said method including a step of buffering said first received signal until receipt of said second received signal, generating a combined signal from said first received signal and said second received signal, decoding said combined signal in a first decoder thereby generating a decoded combined signal, further decoding said decoded combined signal by a second decoder for generating a first estimated information signal, characterized in that said method comprises a step of decoding said first received signal in a third decoder thereby generating a decoded first received signal, for further provision to a fourth decoder for generating a second estimated information signal and for providing an error indication of said decoded first received signal, such that in case the error indication of said decoded first received signal is lower than a first predetermined limit, said second estimated information signal is provided, while in case the error indication is equal to or exceeding said first predetermined limit said first estimated information signal is provided as an output signal comprising the extracted information from said at least two received signals.

In this way, a much faster operation is obtained for incoming signals which have a sufficiently low error level. For these incoming signals, a combining step with a retransmitted signal can actually be avoided.

In a preferred embodiment said first decoder and said third decoder are forward error correction decoders.

In another embodiment said second decoder is a CRC decoder.

In yet another variant the second decoding step by said second decoder further involves the generation and provision of an error indication on the first estimated information signal, which error indication on the first estimated information signal is further compared to a second predetermined limit such that said first estimated information signal is only provided as an output signal in case said error indication on said first estimated signal is lying below said second predetermined limit.

This further enhances the accuracy of the method, by the provision of an additional test with respect to the error level of the first estimated information signal.

In a particular variant an output error signal is provided as output signal in case the error indication on said first estimated information signal is exceeding said second predetermined limit, and in case the error indication on said second estimated information signal is equal to or exceeding said first predetermined limit.

This will enable flagging some potential problems. These may be used for triggering combinations with additional signals, such as in an embodiment for extracting information from a first received signal and from a plurality of other received signals, said method comprising the steps in accordance to claim 5 for extracting information from said first received signal and a first received one of said plurality of other received signals, and for each next received signal of said plurality, said method comprises the steps of temporarily storing all previously received signals, until receipt of said next received signal, respective combining said next received signal with all previously received signals, thereby generating a next combined signal, respectively decoding said next combined signal in a respective next decoder, thereby generating a decoded next combined signal, respectively decoding said decoded next combined signal by a respective second decoder thereby providing a respective next estimated information signal and a respective next error indication, comparing said respective next error indication with a respective next predetermined threshold limit such that when the respective next error indication is lower than said respective next predetermined threshold limit, while the output error indication of the previously estimated information signal is above a previous predetermined threshold limit said respective next estimated information signal will be provided, while in case the error indication of the previously estimated information signal was below said previous predetermined threshold, said previous estimated information signal will be provided as an output signal .

This provides for a multi-stage embodiment wherein the result of the error indication comparisons of all previous steps will be used for triggering next steps, until a sufficiently low error indication level is obtained. In the case where, despite having used e.g. L different retransmissions, the error indication of the thus obtained estimated information signal is still not acceptable, a final error output message will be provided.

The present invention relates as well to embodiments of an arrangement adapted to perform the above mentioned variants.

Yet a further variant of a multi-signal arrangement further comprises at least one quality check module for estimating a quality level of a received signal, said at least one quality check module being coupled to an associated at least one power inhibiting means, such that, in case the estimated quality level of said received signal is lying above a predetermined threshold, said at least one power inhibiting means will switch off all next combiners, next first decoder, next second decoders.

This arrangement will effectively reduce power consumption by inhibiting power supply being provided to all next stages, in case a current received signal was of sufficiently high quality.

Further characteristics will be described in the appended claims.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of different embodiments of the invention will become more apparent and the invention itself will be best understood by referring to the following description of embodiments taken in conjunction with the accompanying drawings wherein
Fig. 1 shows a high level schematic of a prior art arrangement for extracting information from received signals in a Maximum Ratio Combining MRC receiver,
Fig. 2 shows a first high level embodiment SC of an arrangement for extracting information according to the invention,
Figs. 3a-b show other embodiments SCa, SCb of an arrangement according to the invention,
Fig. 4 shows an embodiment of an MRC signal combiner arrangement SCMRC according to the invention
Fig. 5 shows a high level schematic embodiment SCL of a multi-signal arrangement for extracting information from L signals,
Figs. 6a-b show more detailed level implementations SCLa, SCLb of the embodiment of Fig. 5,
Fig. 7 shows a high level schematic variant embodiment of a multi-signal arrangement SCLP comprising power optimization modules,
Fig. 8 shows further details of the control module QC1 used in the embodiment of Fig. 7.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

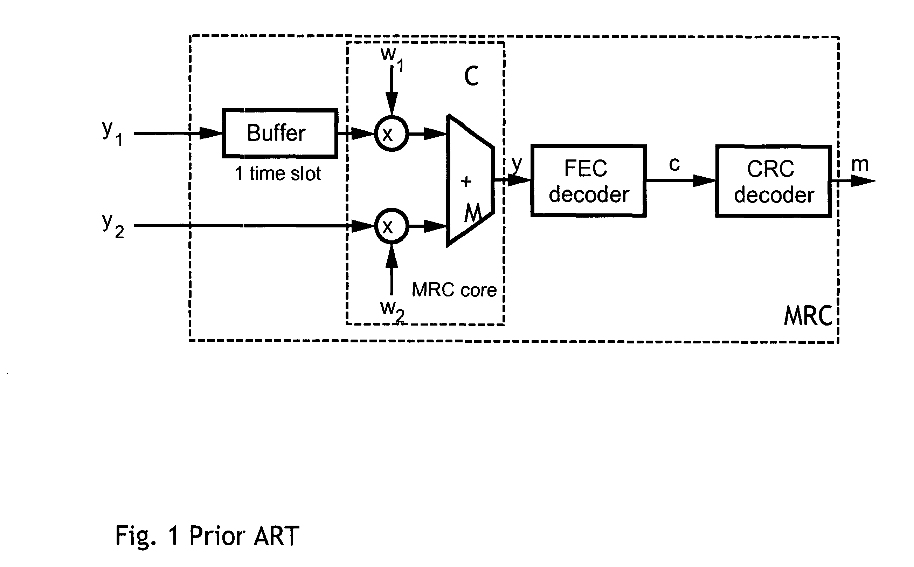

Fig. 1 shows a scheme of a prior art arrangement for extracting information from 2 received signals, as used in a MRC, being the abbreviation of Maximum Ratio Combining, receiver, e.g. used for Hybrid Automatic Repeat request purposes. Hybrid Automatic Repeat Request, hereafter abbreviated by HARQ, refers to a combination of forward error-correction coding, hereafter abbreviated by FEC, and error detection, via the use of an Automatic Repeat Request, meaning that an automatic retransmission of the signal is requested. In Standard Automatic repeat request or ARQ, redundant bits are added to data to be transmitted, enabling the use of error-detecting codes such as cyclic redundancy check, abbreviated by CRC, or others. If this error detection indicates an incorrectly received data block, a retransmission of this block is requested. Hybrid ARQ not only makes use of the error-detecting coding using redundant bits, but, in addition also adds forward error-correction bits. Such forward error-correcting codes are for instance Reed-Solomon and convolutional codes.

HARQ and ARQ are thus often used in conjunction with signal combining, e.g. using maximum ratio combining. An example of such a prior art arrangement for extracting information as used in a MRC combining receiver is depicted in Fig. 1. A first signal y₁ taken at a particular time slot i is buffered, until a retransmitted signal y₂ is received during the next time slot i+ 1. w₁ and w₂ represent weighting factors, with which the incoming values of the signals y₁ and y₂ bits will be multiplied, before being combined in a multiplexer M. In the embodiment of Fig. 1 this multiplexer is a mere adder, by virtue of the predetermined values of the weighting factors w₁ and w₂ themselves. These were e.g. determined earlier by means of other functional circuitry within the receiver and can therefore be considered as constant values stored in a memory, for being used in conjunction with the combining module denoted MRC-core in fig. 1. The output signal of the MRC combining module, denoted y, is further undergoing a forward error correction step in the module denoted FEC decoder. The resulting signal, denoted c, represents a forward error corrected signal, which undergoes a further error detection step in an error detector such as a CRC decoder. The latter is thus adapted to check on specific check bits of its input signal c. In case the error detection reveals the error level to be sufficiently low, e.g. lying below a predetermined maximum level, the check bits are removed from the input signal c, by this CRC decoder. The resulting signal m can be considered as the information extracted from received signals y₁ and y₂, within acceptable error limits..

Other prior art arrangements may use a similar architecture, but may possibly differ in the way they combine the input signals. Although numerous previously disclosed receiver designs are thus based on these combining schemes, so far each of these designs increases the overall latency in case of repeated signals. In fact, these prior art receivers were primarily developed to cope with multipath propagation dealing with buffering delays in the region of a few microseconds. For such small delays it is widely accepted to wait until all signals are available for combining. However, combining schemes have been also proposed for systems that transmit redundant signals in consecutive time slots. In such systems, standard combining adds at least a buffering delay of one time slot to the overall latency. Since the duration of each time slot is in the area of several milliseconds, such latency increase can be inefficient at high data rates.

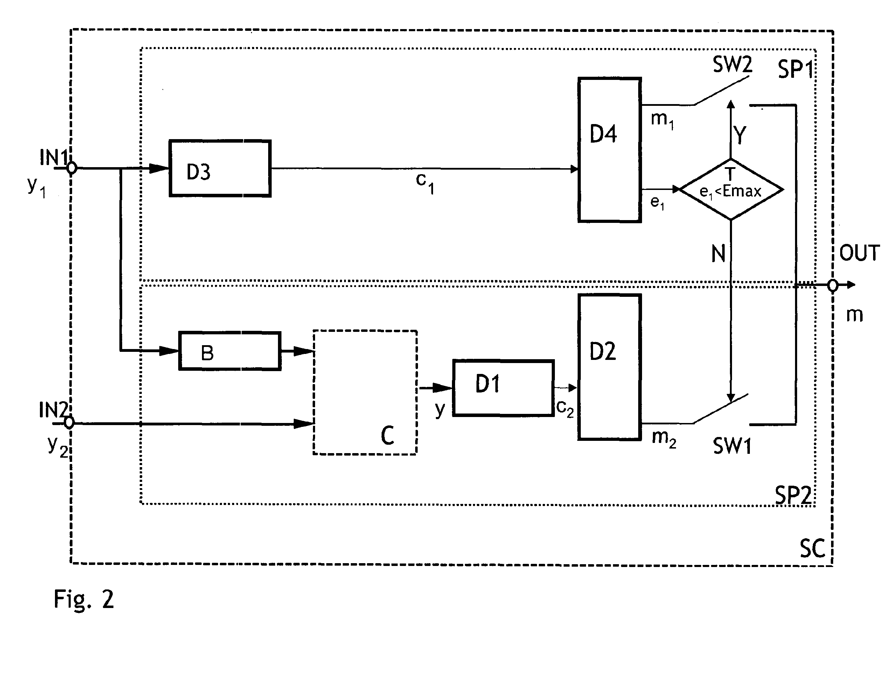

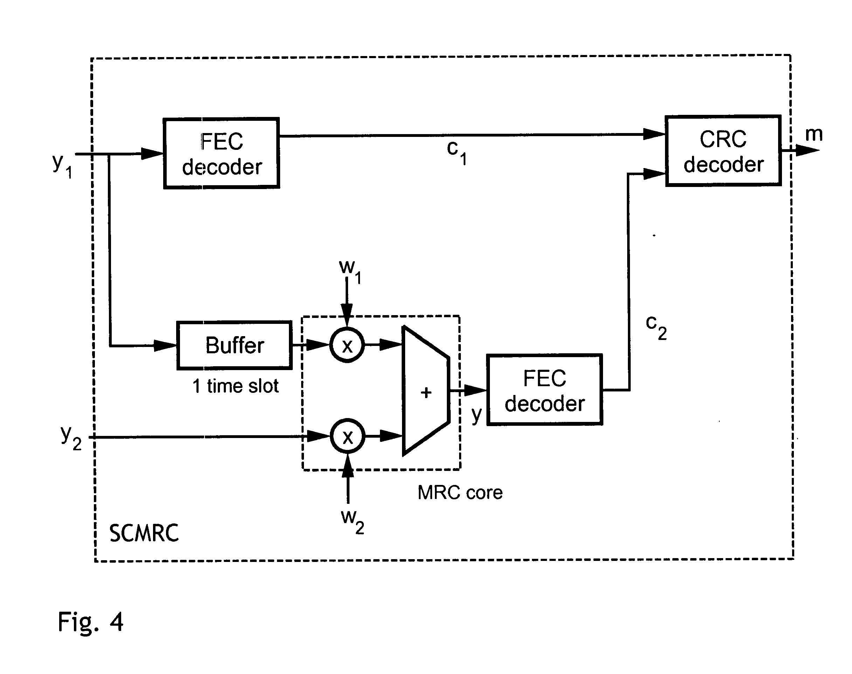

In order to overcome the drawbacks of the prior art arrangements used in combining receivers, an improved arrangement was developed as shown in Fig. 2. This figure shows an arrangement SC for extracting information content from two incoming signals, y₁ and y₂, received at two input terminals IN1 and IN2. SC comprises a buffer B for temporarily storing the first received signal y₁, a combiner C for combining this first received signal y₁ with a second received signal y₂, to thereby create a combined signal denoted y, a first decoder denoted D1, which can be a forward error correction decoder, such as e.g. in the implementation shown in Fig. 4. The output signal of D1 is denoted c₂, which thus represents a decoded combined signal. This is further provided to a second decoder D2, which is adapted to generate or extract from c₂ a first estimated information signal, denoted m₂. In the embodiment of Fig. 4, D2 is part of a combined CRC decoder, as will be further explained with reference to this Fig. 4.

However, in other embodiments, D1 can be a so-called soft-output FEC decoder. Then, D1 uses its output signal c₂ to provide so-called soft-information e.g., in shape of log-likelihood ratio or LLR to subsequent FEC decoders. In this case, D2 can be an FEC decoder or a subsequent stage of an iterative FEC decoding process.

Examples of such iterative FEC decoders are turbo decoders that combine several stages of block or convolution decoders. As well known by a person skilled in the art, implementations of D2 can thus be either the aforementioned examples of block or convolution FEC decoders, or, alternatively an error detection decoder such as CRC decoder.

Arrangement SC further comprises a third decoder D3 for decoding the first received signal y₁. In the embodiment of Fig. 4 this third decoder is again a forward error correction decoder, but in other implementations D3 can be a soft-output FEC decoder. The decoded word from y₁ is denoted c₁, and this is further provided to a fourth decoder D4. In the embodiment of Fig. 4, D4 is part of a combined CRC decoder, but in other implementations D4 can be a subsequent FEC decoder or subsequent stage in an iterative FEC decoding process both making use of soft-information provided by a previous soft-output FEC decoder. Alternatively, D4 can also be a stand-alone decoder for error detection e.g., a CRC decoder, as is the case for D2.

D4 is adapted to generate a second estimated information signal ml from the decoded first received signal c₁, and is further adapted to determine and provide an error indication, denoted e₁, of this decoded first received signal c₁. Arrangement RC further comprises a decision output device, which, in the embodiment of Fig. 2 includes two switches SW1 and SW2, as well as comparator T. The latter is adapted to test the value of the error indication e₁ of the decoded first received signal c₁. In case the error indication e₁ on the decoded first received signal c₁ is below a predetermined limit value, denoted Emax, the output of the comparator will enable to close the second switch SW2, such that the second estimated information signal m₁ will be provided at the output OUT of the arrangement. In case the error indication is equal to or exceeding this predetermined limit Emax, the output of the comparator T will enable to close the first switch SW1, such that the first estimated information signal m₂ will be provided to this output OUT. The output signal m of the arrangement thus either has the value m₁ or m₂, depending on the error indication of the second estimated information signal.

Compared to the prior art embodiments, the presence of the additional upper signal path, which is denoted by the dotted line representing signal path SP1, to the existing lower signal path SP2, will thus speed up the operation, especially if the information extracted from the first received signal is of sufficient quality. This is reflected by the error indication e₁ on this extracted information m₁, being sufficiently low. In case the error is higher than the predetermined threshold, e.g., equal to one if decoder D4 comprises a CRC decoder, the combination with the second received signal, which can be a retransmission of this first signal, will be used for extracting the information. The resulting extracted information m₂ will then be output.

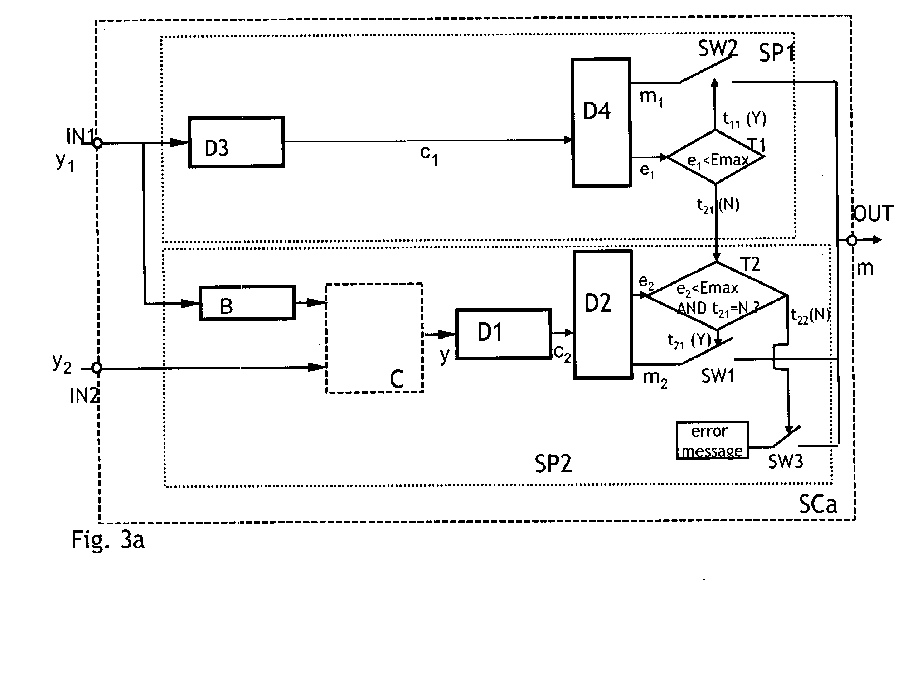

Fig 3a shows a slightly different embodiment SCa of an arrangement for extracting information content from two received signals y₁ and y₂. When compared to Fig. 2, the embodiment depicted in Fig. 3a shows that the decision output device now not only comprises two switches SW1 and SW2 and a comparator T1, but it now also includes an additional comparator T2, which also checks the error on the estimated information from the decoded combined signal c₂. This thus also implies that the second decoder D2 is not only adapted to decode the combined signal c₂, resulting in a first estimated information signal m₂, but that D2 also provides an error indication e₂ on this first estimated information signal m₂. The check on this second error indication e₂ is however only performed in case the error indication e₁ was equal to or exceeding the predetermined limit. This may be realized in some embodiments by the second comparator T2 being triggered by the first one T1, or, alternatively, as shown in the embodiment of Fig. 3a, the second comparator T2 receiving an additional control signal from the first one T1, this control signal being denoted t₂₁(N). By testing whether both the error indication e₂ is below a predetermined limit and whether the output signal t₂₁(N) provided by T1 is indicative that e₁ was equal to or above the predetermined limit Emax, and by closing SW1 only if both conditions are performed, an unambiguous and correct output signal m₂ will be guaranteed. In the embodiment of Fig. 3a the predetermined limits Emax against which both error indications e₁ and e₂ are compared, is the same. For instance, if D2 and D4 are both CRC decoders and e₁ and e₂ reflect the number of errors, a typical threshold setting would be Emax1 =Emax2=1. In this case, only error-free signals are provided as the output signal m. However in other implementations, the threshold for e₁ can be different from the threshold for testing e₂. This can be the case when D2 and D4 are CRC decoders and a small number of errors may be tolerated within m when even the combined signal is insufficient for retrieving error-free information. In this case, Emax1 <Emax2, e.g., Emax1 = 1 and Emax2=2. Such setting limits the average delay and is, thus, beneficial in real-time or soft real-time communication systems that operate under strict delay constraints but tolerate a certain number of errors at the physical layer.

In case none of the error indications are acceptably low, meaning that the estimated information signal is not of sufficient quality or information content, an error output signal will be provided. In the embodiment of Fig. 3a this is realized by the output of T2 triggering closure of a third switch SW3 , coupled to an error message device. In case the output of T2, denoted by t₂₂(N) thus indicates that e₂ is equal to or above Emax, this error message will appear at the output.

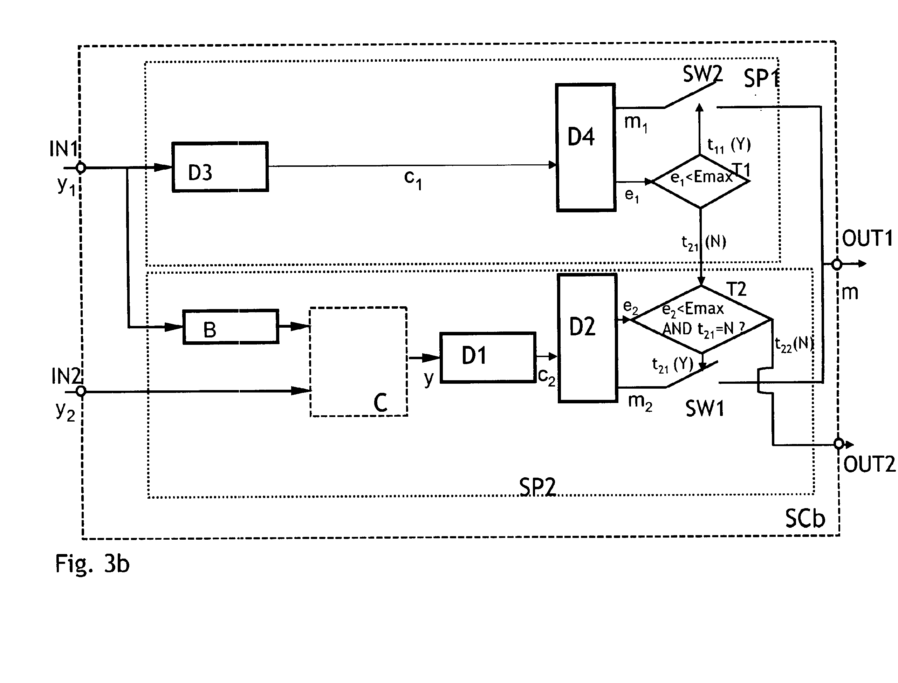

In the embodiment of Fig. 3b, the output t₂₂(N) of the second comparator T2, indicating that the error e₂ is not acceptable, is then provided to an additional output OUT2. The other modules of SCb are similar to the same named modules of SCa of Fig. 3a.

Fig. 4 gives an example of an MRC combining arrangement denoted SCMRC. In this case the combiner C of Fig. 2 is a MRC combiner, as described in an earlier paragraph. The first and third decoders D1 and D3 of Fig. 2 are forward error correction, abbreviated by FEC, decoders, whereas the second and fourth decoder, as well as the decision output device are now all comprised within the module denoted CRC decoder on Fig. 4. This module thus may comprise two separate CRC decoders, together with one or two comparators and two or three switches, as indicated on Figs. 2 and 3a. As previously mentioned such an MRC combining arrangement may be beneficial in HARQ techniques. It is however to be remarked that HARQ is just one example where combining techniques as used for repeated signals. Other examples where this arrangement may be beneficial are relaying, cooperative relaying, or distributed MIMO systems where multiple nodes repeat each other's packets to increase the overall network performance.

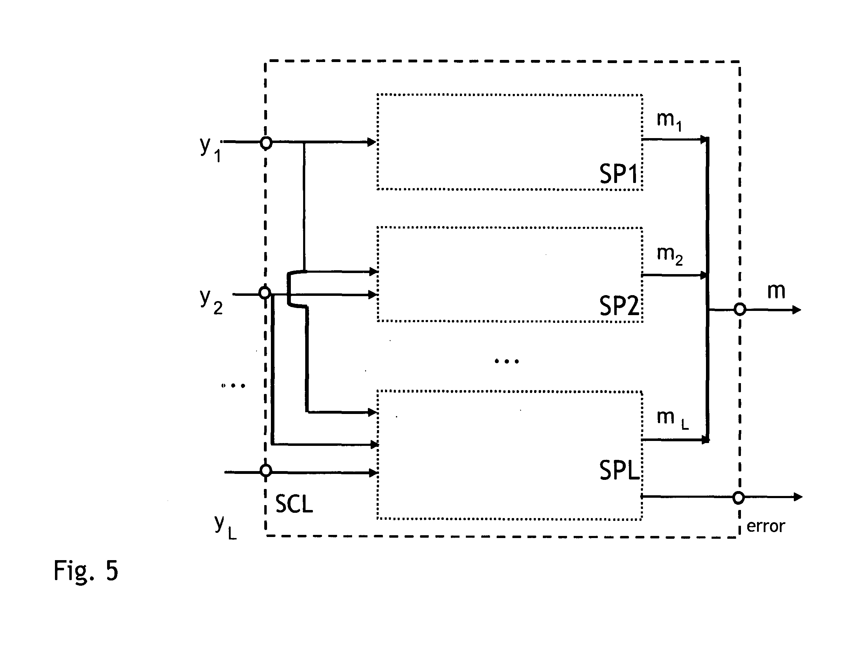

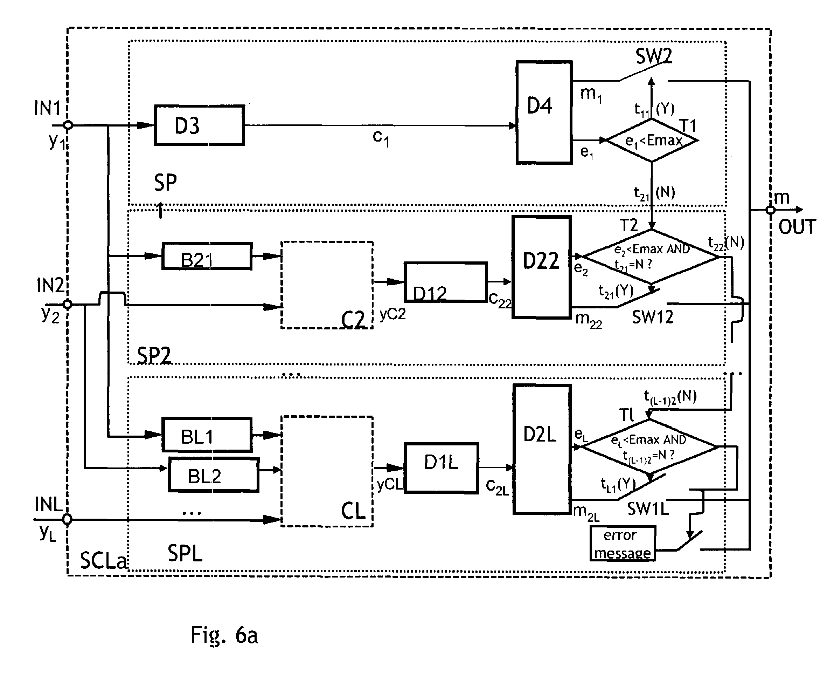

The method is not only applicable to two input signals, but to any number of input signals. This is schematically shown in Fig. 5, showing an embodiment of a multi-signal arrangement SCL, for extracting information from L received signals y₁, y₂, ..., y_{L}. In this respect this embodiment can be considered as comprising L parallel path modules denoted SP1 to SPL, each generating successive estimates m₁, to m_{L} of the information content of the input signal y₁ to the respectively combined input signals y₁ to y_{L}. All successive estimations are combined in an analogous way as explained with respect to the embodiment for 2 input signals, to yield a final estimated signal denoted m, which is provided to the output. In case the error of the information content as provided by the last stage is still not sufficiently low, an error message may be provided, either via an additional output, as is the case in the embodiment of Fig. 5, either via the same output as will be discussed in further embodiments as shown in Fig. 6a.

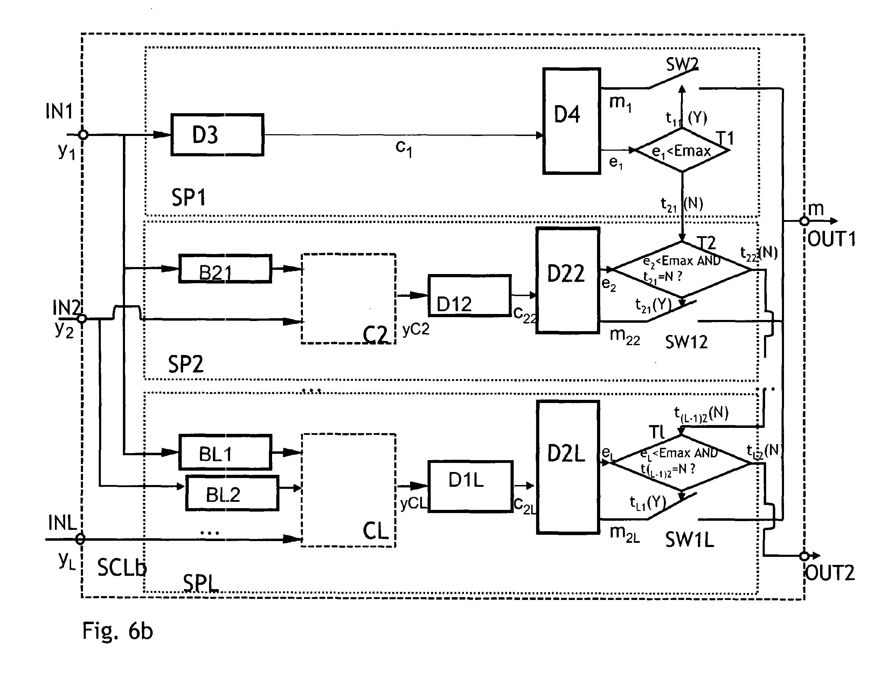

Multi-signal arrangement SCL of Fig. 5, as well as more detailed implementations SCLa and SLCb, depicted in Figs 6a-b, can thus be considered as each comprising an arrangement SC for extracting information from the first received signal and a first one y₂ of the plurality of other received signals y₂,..., y_{L}, and to further comprise, for each next signal of said plurality y₃,...,y_{L}, at least one respective buffer. The situation is not depicted for signal y₃, but is depicted for signal y_{L}, where L-1 buffers, of which only BL1 and BL2 are shown, are available for temporarily storing all previously received signals y₁,y₂,...,y_{L-1}, until receipt of this next signal y_{L}. BL1 in Figs 6a and 6b, thus stores y₁, until all next signals y₂, y₃ to y_{L} are received. Similarly BL2 stores y₂, until all next signals y₃ to y_{L} are received, and this will then continue for buffering signal y_{L-1}, until signal y_{L} is received. All these signals are then provided to a respective multi-signal combiner for combining this next signal y_{L} and all previously received signals, thereby generating a next combined signal. This multi-signal combiner is depicted for the L'th stage, and denoted CL, and the provided next combined signal is denoted yCL in both Figs 6a and 6b. This combined signal is provided to a respective next first decoder D1L for decoding said next combined signal, thereby generating a decoded next combined signal c_{2L}. This is in its turn provided to a respective next second decoder D2L for respectively decoding said decoded next combined signal c_{2L}, thereby providing a respective next estimated signal m_{2L} and a respective next error indication e_{L}. This is in its turn provided to a next decision output device comprising a comparator TL and a switch SW1 L. The comparator itself is further adapted to receive from the decision output device from the previously received signal y_{(L-1)} the previously determined output error signal t_{(L-1)2}, such that, in case said previously determined output error signal indicates that the error indication e_{L-1} on the previous estimated information signal m_{L-1} is equal to or above a previous predetermined threshold while the respective next error indication e_{L} is lower than a next predetermined threshold, the respective next estimated information signal m_{L} will be provided to the output of the multi-signal arrangement. In case the error indication e_{L-1} of the previously estimated signal m_{L-1} was below the previous predetermined threshold, the the previous estimated signal m_{L-1} was already provided to the output, and the comparator TL will not provide m_{L} to .the output, as the previously determined output error signal t_{(L-1)2} would not indicate a "N", meaning that e_{L-1} was indeed below the previous predetermined threshold limit.

In case the error indication of all estimated signals is still equal to or above the predetermined respective thresholds, an error message is output. In the embodiment of Fig. 6a, this is realized by the present of an additional switch, a serial output of which is also connected to the output of the multi-signal arrangement. The embodiment of Fig. 6b on the other hand provides an extra output OUT2, on which the output of the comparator of the last stage, indicative of signal e_{L} being higher than the predetermined threshold for this stage, will be provided.

In both embodiments SCLa and SCLb all successive error indications are compared against the same maximum allowable threshold. However in other implementations, the predetermined thresholds can vary from stage to stage, e.g. in a similar way as was earlier explained with respect to the embodiments receiving only two signals.

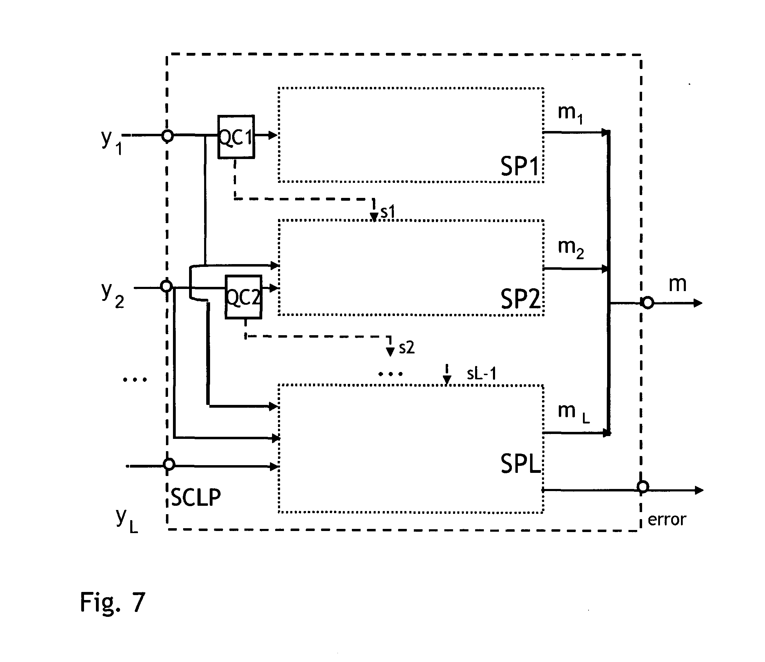

Fig. 7 shows a multi-signal arrangement SCLP which is aimed at lowering the power consumption. Compared to the embodiment of fig. 5 this arrangement includes L-1 quality check modules, of which only the first two are shown and which are denoted QC1, QC2. These quality check modules are adapted to already test the quality of the incoming signal, such that, if this quality is not sufficient, the power supply of the next signal path will be switched on, while if, the quality of this incoming signal e.g. y₁, is already sufficiently good, no other next module will be switched on. Only in case L-1 successive signals y₁ to y_{L-1} are of non-acceptable quality, the L signal path modules SP1 to SPL will be activated. This thus considerably reduces the power consumption of such a multi-signal arrangement.

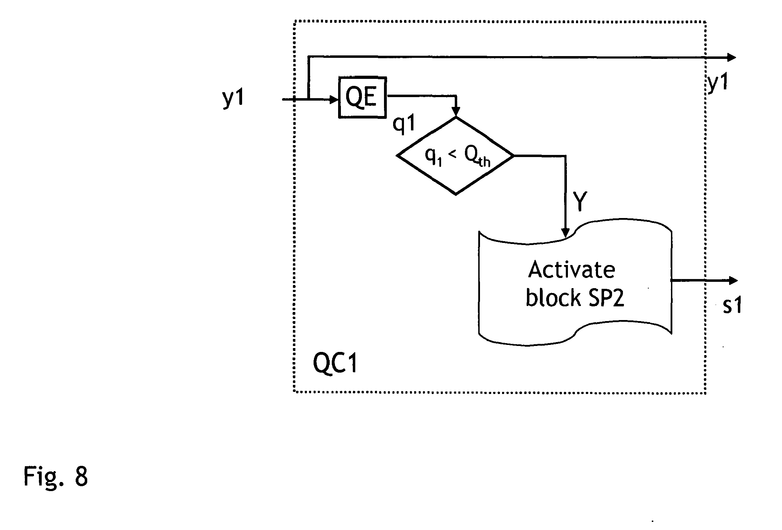

An embodiment of quality check module QC1 is depicted in Fig. 8. It contains a sub-module, denoted QE to estimate a quality measure of the signal provided to it. Such a sub-module can for instance determine the signal to-noise-ratio, abbreviated by SNR, of the signal provided to it. This quality measure, denoted q₁ for signal y₁, is then compared to a predetermined threshold, Qth. If the quality is not sufficient, the next signal path will be activated. In case the quality is acceptable, the next blocks will not be activated, and the estimated value of the signal under consideration will be provided at the output of this submodule QC1. The values for such quality thresholds Qth depend on the used modulation and coding schemes. For instance, for widely-used QPSK modulation and a single-stage convolutional FEC code with coderate 1/2 and generator polynomials g₀=133 (oct), g₁=171(oct), a typical SNR threshold of Qth=6 dB would be chosen to reach a block error rate of 10%. If the above code is punctured to a coderate of 3/4, a higher threshold of of Qth=9 dB would be chosen. Lower SNR thresholds would be chosen with more powerful FEC codes and decoders or for higher target error rates. In systems where SNR cannot be obtained, similar thresholds can be given in terms of received signal power or received signal strength indicator, which is abbreviated by RSSI.

While the principles of the invention have been described above in connection with specific apparatus, it is to be clearly understood that this description is made only by way of example and not as a limitation on the scope of the invention, as defined in the appended claims.

## Claims

1. Method for extracting information from a first received signal (y₁) and from a second received signal (y₂), said method including a step of buffering said first received signal (y₁) until receipt of said second received signal (y₂), generating a combined signal (y) from said first received signal (y₁) and said second received signal (y₂), decoding said combined signal (y) in a first decoder (D1) thereby generating a decoded combined signal (c₂), further decoding said decoded combined signal (c₂) by a second decoder (D2) for generating a first estimated information signal (m₂),
**characterized in that** said method comprises a step of decoding said first received signal (y₁) in a third decoder (D3) thereby generating a decoded first received signal (c₁), for further provision to a fourth decoder (D4) for generating a second estimated information signal (m₁) and for providing an error indication (e₁) of said decoded first received signal , such that in case the error indication (e₁) is below a first predetermined limit (Emax), said second estimated information signal (m₁) is provided , while in case the error indication is equal to or exceeding said first predetermined limit (Emax) said first estimated information signal (m₂) is provided as an output signal comprising the extracted information from said at least two received signals.

2. Method according to claim 1 wherein said first decoder (D1) and said third decoder (D3) are forward error correction decoders.

3. Method according to claim 1 or 2 wherein said second decoder (D2) is a CRC decoder.

4. Method according to any of the previous claims 1-3 wherein during said second decoding step by said second decoder (D2) an error indication (e₂) on the first estimated information signal (m₂) is provided, which is further compared to a second predetermined limit such that said first estimated information signal (m₂) is only provided as an output signal in case said error indication (e₂) on said first estimated information signal (m₂) is lying below said second predetermined limit.

5. Method according to claim 4 wherein, in case the error indication (e₂) on said first estimated information signal (m₂) is equal to or exceeding said second predetermined limit, and in case the error indication (e₁) on said second estimated information signal (m₁) is equal to or exceeding said first predetermined limit, an output error signal is provided as output signal.

6. Method for extracting information from a first received signal (y₁) and from a plurality of other received signals (y₂,y₃...,y_{L}), **characterized in that** said method comprises the steps in accordance to claim 5 for extracting information from said first received signal and a first received one (y₂) of said plurality of other received signals (y₂,...,y_{L}), and for each next received signal of said plurality (y₃,...,y_{L}), said method comprises the steps of temporarily storing all previously received signals, until receipt of said next received signal, respective combining said next received signal with all previously received signals, thereby generating a next combined signal (yCL), respectively decoding said next combined signal in a respective next decoder (D1L), thereby generating a decoded next combined signal (c_{2L}), respectively decoding said decoded next combined signal (c_{2L}) by a respective second decoder (D2L) thereby providing a respective next estimated signal (m_{2L}) and a respective next error indication (e_{L}), comparing said respective next error indication (e_{L}) with a respective next predetermined threshold limit such that when the respective next error indication (e_{L}) is lower than said respective next predetermined threshold limit, while the output error indication (e_{L-1}) on the previously estimated information signal (m_{2(L-1)}) is equal to or above a previous predetermined threshold limit, said respective next estimated information signal (m_{2L}) will be provided , while in case the error indication (e_{L-1}) of the previously estimated information signal (m_{2(L-1)}) was below said previous predetermined threshold, said previous estimated information signal (m_{2(L-1)}) will be provided as an output signal.

7. Arrangement (SC) for extracting information from a first received signal (y₁) and from a second received signal (y₂), said arrangement (SC) including a buffer (B) for temporarily storing said first received signal (y₁), a combiner (C) for combining said first received signal (y₁) and said second received signal (y₂) for thereby providing a combined signal (y), a first decoder (D1) for decoding said combined signal (y) thereby providing a decoded combined signal (c₂), a second decoder (D2) for further decoding said decoded combined signal (c₂) for thereby generating a first estimated information signal (m₂)
**characterized in that** said arrangement (SC) further comprises a third decoder (D3) for decoding said first received signal (y₁) thereby generating a decoded first received signal (c₁), a fourth decoder (D4) for providing a second estimated information signal (m₁) from said decoded first received signal (c₁) and for providing an error indication (e₁) of said decoded first received signal , a decision output device (T, SW1,SW2) being adapted test the value of said error indication (e₁) such that in case the error indication (e₁) on the decoded first received signal (c₁) is below a first predetermined limit (Emax), said decision output device (T, SW1, SW2) is adapted to provide said second estimated information signal (m₁) to the output of the signal combiner (SC), while in case the error indication is equal to or exceeding said first predetermined limit (Emax) said decision output device (T, SW1,SW2) is adapted to provide said first estimated information signal (m₂) to an output (OUT) of the signal combiner (SC)

8. Arrangement (SC) according to claim 7 wherein said first decoder (D1) and said third decoder (D3) are forward error correction decoders.

9. Arrangement (SC) according to claim 7 or 8 wherein said second decoder (D2) is a CRC decoder.

10. Arrangement (SCa, SCb) according to any of the previous claims 7-9 wherein said second decoder (D2) is further adapted to provide an error indication (e₂) on the first estimated information signal (m₂) and wherein said decision output device (T1, T2, SW1, SW2) is further adapted to test said error indication (e₂) on said first estimated signal such that said first estimated information signal (m₂) is only provided to the output of the signal combiner in case said error indication on said first estimated signal is lying below a second predetermined limit.

11. Arrangement (SCa,SCb) according to claim 10 wherein said decision output device (T1,T2, SW1, SW2) is further adapted to provide an output error signal , in case the error indication (e₂) on said first estimated information signal is equal to or exceeding said second predetermined limit, and in case the error indication (e₁) on said second estimated information signal is equal to or exceeding said first predetermined limit.

12. Arrangement (SCa, SCb) according to claim 10 wherein said output error signal is provided to the output (OUT) of said arrangement combiner or to an additional output (OUT2) of said arrangement.

13. Multi-signal arrangement (SCL, SCLa, SCLb) for extracting information from a first received signal (y₁) and a plurality of other received signals (y_{2,}y_{3...,}y_{L}), **characterized in that** said multi-signal arrangement comprises an arrangement in accordance to claim 11 for extracting information from said first received signal (y₁) and a first one (y₂) of said plurality of other received signals (y₂,...,y_{L}), said multi-signal arrangement further comprising, for each next received signal of said plurality (y_{3,}...,y_{L}), at least one respective buffer (BL1,BL2) for temporarily storing all previously received signals, until receipt of said next received signal (y_{L}), a respective multi-signal combiner (CL) for combining said next received signal (y_{L}) and all previously received signals (y₂,y₃...,y_{L-1}), thereby generating a next combined signal (yCL), a respective next first decoder (D1L) for decoding said next combined signal , thereby generating a decoded next combined signal (c_{2L}), a respective next second decoder (D2L) for respectively decoding said decoded next combined signal (c_{2L}), thereby providing a respective next estimated information signal (m_{2L}) and a respective next error indication (e_{L}), for provision to a next decision output device (TL, SW1 L) which is further adapted to receive from the previous decision output device (TL-1) a previous output error signal (t_{(L-1)2}), such that, in case said previous output error signal (t_{(L-1)2}) indicates that the error indication (e_{(L-1)}) on the previous estimated information signal (m_{2(L-1)}) is equal to or above a previous predetermined threshold limit while the respective next error indication (e_{L}) is lower than a respective next predetermined threshold limit, said respective next estimated information signal (m_{L}) will be provided to the output (OUT) of said multi-signal arrangement.

14. Arrangement according to any of the previous claims 7-12, further comprising a quality check module for estimating a quality level of said first received signal (y₁), and inhibiting means for, in case the estimated quality level of said first signal is lying above a predetermined threshold, inhibiting the powering of said first buffer, said combiner, said first decoder and said second decoder.

15. Multi-signal arrangement (SCLP) according to claim 13, further comprising at least one quality check module (QC1; QC2) for estimating a quality level of a received signal (y₁, _{y2}), said at least one quality check module being coupled to an associated at least one power inhibiting means, such that, in case the estimated quality level of said received signal is lying above a predetermined threshold, said at least one power inhibiting means will switch off all next combiners, all next first decoder , all next second decoders.

## Patentansprüche

1. Verfahren zum Extrahieren von Informationen aus einem ersten empfangenen Signal (y₁) und aus einem zweiten empfangenen Signal (y₂), wobei das besagte Verfahren einen Schritt des Zwischenspeicherns des besagten ersten empfangenen Signals (y₁) bis zum Empfang des besagten zweiten empfangenen Signals (y₂), das Erzeugen eines kombinierten Signals (y) ausgehend von dem besagten ersten empfangenen Signal (y₁) und dem besagten zweiten empfangenen Signal (y₂), das Decodieren des besagten kombinierten Signals (y) in einem ersten Decoder (D1), wodurch ein decodiertes kombiniertes Signal (c₂) entsteht, und weiterhin das Decodieren des besagten decodierten kombinierten Signals (c₂) durch einen zweiten Decoder (D2) zum Erzeugen eines ersten geschätzten Informationssignals (m₂) umfasst,
**dadurch gekennzeichnet, dass** das besagte Verfahren einen Schritt des Decodierens des besagten ersten empfangenen Signals (y₁) in einem dritten Decoder (D3) umfasst, wodurch ein decodiertes erstes empfangenes Signal (c₁) erzeugt wird, welches weiterhin an einen vierten Decoder (D4) bereitgestellt wird, um ein zweites geschätztes Informationssignals (m₁) zu erzeugen und einen Fehlerhinweis (e₁) des besagten decodierten ersten empfangenen Signals bereitzustellen, so dass, wenn der Fehlerhinweis (e₁) eine erste vorbestimmte Grenze (Emax) unterschreitet, das besagte zweite geschätzte Informationssignal (m₁) bereitgestellt wird, während, wenn der Fehlerhinweis gleich der besagten ersten vorbestimmten Grenze (Emax) ist oder diese überschreitet, das besagte erste geschätzte Informationssignal (m₂) als ein Ausgangssignal, welches die aus den besagten mindestens zwei empfangenen Signalen extrahierten Informationen enthält, bereitgestellt wird.

2. Verfahren nach Anspruch 1, wobei der besagte erste Decoder (D1) und der besagte dritte Decoder (D3) Vorwärtsfehlerkorrektur-Decoder sind.

3. Verfahren nach Anspruch 1 oder 2, wobei der besagte zweite Decoder (D2) ein CRC-Decoder ist.

4. Verfahren nach einem beliebigen der vorstehenden Ansprüche 1-3, wobei während des besagten zweiten Schritts des Decodierens durch den besagten zweiten Decoder (D2) ein Fehlerhinweis (e₂) auf dem ersten geschätzten Informationssignal (m₂) bereitgestellt wird, welches weiterhin mit einer zweiten vorbestimmten Grenze verglichen wird, so dass das besagte erste geschätzte Informationssignal (m₂) nur dann als ein Ausgangssignal bereitgestellt wird, wenn der besagte Fehlerhinweis (e₂) auf dem besagten ersten geschätzten Informationssignal (m₂) die besagte zweite vorbestimmte Grenze unterschreitet.

5. Verfahren nach Anspruch 4, wobei, wenn der Fehlerhinweis (e₂) auf dem besagten ersten geschätzten Informationssignal (m₂) gleich der besagten zweiten vorbestimmten Grenze ist oder diese überschreitet, und wenn der Fehlerhinweis (e₁) auf dem besagten zweiten geschätzten Informationssignal (m₁) gleich der besagten ersten vorbestimmten Grenze ist oder diese überschreitet, ein Ausgangsfehlersignal als Ausgangssignal bereitgestellt wird.

6. Verfahren zum Extrahieren von Informationen aus einem ersten empfangenen Signal (y₁) und aus einer Vielzahl von anderen empfangenen Signalen (y₂, y₃...,y_{L}), **dadurch gekennzeichnet, dass** das besagte Verfahren die Schritte gemäß Anspruch 5 zum Extrahieren von Informationen aus dem besagten ersten empfangenen Signal und einem ersten empfangenen Signal (y₂) der besagten Vielzahl von anderen empfangenen Signalen (y₂,...,y_{L}) umfasst, und dass das besagte Verfahren für jedes nächstes empfangenes Signal der besagten Vielzahl (y₃,...,y_{L}) die Schritte des Zwischenspeicherns aller zuvor empfangenen Signale bis zum Empfang des besagten nächsten empfangenen Signal, des entsprechenden Kombinierens des besagten nächsten empfangenen Signals mit allen zuvor empfangenen Signalen, wodurch ein nächstes kombiniertes Signal (yCL) erzeugt wird, des entsprechenden Decodierens des besagten nächsten kombinierten Signals in einem entsprechenden nächsten Decoder (D1L), wodurch ein decodiertes nächstes kombiniertes Signal (c_{2L}) erzeugt wird, des entsprechenden Decodierens des besagten decodierten nächsten kombinierten Signals (c_{2L}) durch einen entsprechenden zweiten Decoder (D2L), wodurch ein entsprechendes nächstes geschätztes Signal (m_{2L}) und ein entsprechender nächster Fehlerhinweis (e_{L}) bereitgestellt werden, des Vergleichens des besagten entsprechenden nächsten Fehlerhinweises (e_{L}) mit einer entsprechenden nächsten vorbestimmten Schwellenwertgrenze, so dass, wenn der entsprechende nächste Fehlerhinweis (e_{L}) die besagte entsprechende nächste vorbestimmte Schwellenwertgrenze unterschreitet, während der Ausgangsfehlerhinweis (e_{L-1}) auf dem zuvor geschätzten Informationssignal (m_{2(L-1)}) gleich einer vorherigen vorbestimmten Schwellenwertgrenze ist oder diese überschreitet, das besagte entsprechende nächste geschätzte Informationssignal (m_{2L}) bereitgestellt wird, während, wenn der Fehlerhinweis (e_{L-1}) des zuvor geschätzten Informationssignals (m_{2(L-1)} niedriger als der besagte zuvor vorbestimmte Grenzwert war, das besagte vorherige geschätzte Informationssignal (m_{2(L-1)}) als ein Ausgangssignal bereitgestellt wird, umfasst.

7. Anordnung (SC) zum Extrahieren von Informationen aus einem ersten empfangenen Signal (y₁) und aus einem zweiten empfangenen Signal (y₂), wobei die besagte Anordnung (SC) einen Pufferspeicher (B) zum Zwischenspeichern des besagten ersten empfangenen Signals (y₁), einen Kombinierer (C) zum Kombinieren des besagten ersten empfangenen Signals (y₁) und des besagten zweiten empfangenen Signals (y₂), wodurch ein kombiniertes Signal (y) bereitgestellt wird, einen ersten Decoder (D1) zum Decodieren des besagten kombinierten Signals (y), wodurch ein decodiertes kombiniertes Signal (c₂) bereitgestellt wird, einen zweiten Decoder (D2) zum weiteren Decodieren des besagten decodierten kombinierten Signals (c₂), wodurch ein erstes geschätztes Informationssignal (m₂) erzeugt wird, umfasst,
**dadurch gekennzeichnet, dass** die besagte Anordnung (SC) weiterhin einen dritten Decoder (D3) zum Decodieren des besagten ersten empfangenen Signals (y₁), wodurch ein decodiertes erstes empfangenes Signal (c₁) erzeugt wird, einen vierten Decoder (D4) zum Bereitstellen eines zweiten geschätzten Informationssignals (m₁) ausgehend von dem besagten decodierten ersten empfangenen Signal (c₁) und zum Bereitstellen eines Fehlerhinweises (e₁) auf dem besagten decodierten ersten empfangenen Signal, eine Entscheidungsausgabevorrichtung (T, SW1, SW2), welche dazu ausgelegt ist, den Wert des besagten Fehlerhinweises (e₁) zu testen, so dass, wenn der Fehlerhinweis (e₁) auf dem decodierten ersten empfangenen Signal (c₁) eine erste vorbestimmte Grenze (Emax) unterschreitet, die besagte Entscheidungsausgabevorrichtung (T, SW1, SW2) dazu ausgelegt ist, ein zweites geschätztes Informationssignal (m₁) an den Ausgang des Signalkombinierers (SC) bereitzustellen, während, wenn der Fehlerhinweis gleich der besagten ersten vorbestimmten Grenze (Emax) ist oder diese überschreitet, die besagte Entscheidungsausgabevorrichtung (T, SW1, SW2) dazu ausgelegt ist, das besagte erste geschätzte (m₂) an einen Ausgang (OUT) des besagten Signalkombinierers (SC) bereitzustellen, umfasst.

8. Anordnung (SC) nach Anspruch 7, wobei der besagte erste Decoder (D1) und der besagte dritte Decoder (D3) Vorwärtsfehlerkorrektur-Decoder sind.

9. Anordnung (SC) nach Anspruch 7 oder 8, wobei der besagte zweite Decoder (D2) ein CRC-Decoder ist.

10. Anordnung (SCa, SCb) nach einem beliebigen der vorstehenden Ansprüche 7-9, wobei der besagte zweite Decoder (D2) weiterhin für das Bereitstellen eines Fehlerhinweises (e₂) auf dem ersten geschätzten Informationssignal (m₂) ausgelegt ist, und wobei die besagte Entscheidungsausgabevorrichtung (T1, T2, SW1, SW2) weiterhin für das Testen des besagten Fehlerhinweises (e₂) auf dem besagten ersten geschätzten Signal ausgelegt ist, so dass das besagte erste geschätzte Informationssignal (m₂) nur dann an den Ausgang des Signalkombinierers bereitgestellt wird, wenn der besagte Fehlerhinweis auf dem besagten ersten geschätzten Signal eine zweite vorbestimmte Grenze unterschreitet.

11. Anordnung (SCa, SCb) nach Anspruch 10, wobei die besagte Entscheidungsausgabevorrichtung (T1, T2, SW1, SW2) weiterhin dazu ausgelegt ist, ein Ausgangsfehlersignal bereitzustellen, wenn der Fehlerhinweis (e₂) auf dem besagten ersten geschätzten Informationssignal gleich der besagten zweiten vorbestimmten Grenze ist oder diese überschreitet, und wenn der Fehlerhinweis (e₁) auf dem besagten zweiten geschätzten Informationssignal gleich der besagten ersten vorbestimmten Grenze ist oder diese überschreitet.

12. Anordnung (SCa, SCb) nach Anspruch 10, wobei das besagte Ausgangsfehlersignal an den Ausgang (OUT) des besagten Anordnungskombinierers oder an einen zusätzlichen Ausgang (OUT2) der besagten Anordnung bereitgestellt wird.

13. Multisignal-Anordnung (SCL, SCLa, SCLb) zum Extrahieren von Informationen aus einem ersten empfangenen Signal (y₁) und einer Vielzahl von anderen empfangenen Signalen (y₂,y₃...,y_{L}), **dadurch gekennzeichnet, dass** die besagte Multisignal-Anordnung eine Anordnung gemäß Anspruch 11 zum Extrahieren von Informationen aus dem besagten ersten empfangenen Signal (y₁) und einem ersten (y₂) der besagten Vielzahl von anderen empfangenen Signalen (y₂,...,y_{L}) umfasst, wobei die besagte Multisignal-Anordnung weiterhin, für jedes nächste empfangene Signal der besagten Vielzahl (y₃...,y_{L}), mindestens einen entsprechenden Pufferspeicher (BL1, BL2) zum Zwischenspeichern aller zuvor empfangenen Signale bis zum Empfang des besagten nächsten empfangenen Signals (y_{L}), einen entsprechenden Multisignal-Kombinierer (CL) zum Kombinieren des besagten nächsten empfangenen Signals (y_{L}) und aller zuvor empfangenen Signale (y₂, y₃...,y_{L-1}), wodurch ein nächstes kombiniertes Signal (yCL) erzeugt wird, einen entsprechenden nächsten ersten Decoder (D1L) zum Decodieren des besagten nächsten kombinierten Signals, wodurch ein decodiertes nächstes kombiniertes Signal (c_{2L}) erzeugt wird, einen entsprechenden nächsten zweiten Decoder (D2L) zum entsprechenden Decodieren des besagten decodierten nächsten kombinierten Signals (c_{2L}), wodurch ein entsprechendes nächstes geschätztes Informationssignal (m_{2L}) und ein entsprechender nächster Fehlerhinweis (e_{L}) bereitgestellt werden, um diese an eine nächste Entscheidungsausgabevorrichtung (TL, SW1L) bereitzustellen, welche weiterhin für den Empfang eines vorherigen Ausgangsfehlersignals (t_{(L-1)2}) von der vorherigen Entscheidungsausgabevorrichtung (TL-1) ausgelegt ist, so dass, wenn das besagte vorherige Ausgangsfehlersignal (t_{(L-1)2}) anzeigt, dass der Fehlerhinweis (e_{(L-1)}) auf dem vorherigen geschätzten Informationssignal (m_{2(L-1)}) gleich einer vorherigen vorbestimmten Schwellenwertgrenze ist oder diese überschreitet, während der entsprechende nächste Fehlerhinweis (e_{L}) eine entsprechende nächste vorbestimmte Schwellenwertgrenze unterschreitet, das besagte entsprechende nächste geschätzte Informationssignal (m_{L}) an den Ausgang (OUT) der besagten Multisignal-Anordnung bereitgestellt wird, umfasst.

14. Anordnung nach einem beliebigen der vorstehenden Ansprüche 7-12, weiterhin umfassend ein Qualitätsprüfungsmodul zum Schätzen eines Gütegrads des besagten ersten empfangenen Signals (y₁), und Sperrmittel zum Verhindern des Anschaltens des besagten ersten Pufferspeichers, des besagten Kombinierers, des besagten ersten Decoders und des besagten zweiten Decoders, wenn der geschätzte Gütegrad des besagten ersten Signals einen vorbestimmten Schwellenwert überschreitet.

15. Multisignal-Anordnung (SCLP) nach Anspruch 13, weiterhin umfassend mindestens ein Qualitätsprüfungsmodul (QC1; QC2) zum Schätzen eines Gütegrads eines empfangenen Signals (y₁, y₂), wobei das besagte mindestens eine Qualitätsprüfungsmodul an mindestens ein assoziiertes Stromsperrmittel gekoppelt ist, so dass das besagte mindestens eine Stromsperrmittel alle nächsten Kombinierer, alle nächsten ersten Decoder und alle nächsten zweiten Decoder abschaltet, wenn der geschätzte Gütegrad des besagten empfangenen Signals einen vorbestimmten Schwellenwert überschreitet.

## Revendications

1. Procédé pour extraire des informations d'un premier signal reçu (y₁) et d'un deuxième signal reçu (y₂), ledit procédé comprenant une étape de mise en tampon dudit premier signal reçu (y₁) jusqu'à la réception dudit deuxième signal reçu (y₂), générant un signal combiné (y) dudit premier signal reçu (y₁) et dudit deuxième signal reçu (y₂), décodant ledit signal combiné (y) dans un premier décodeur (D1), générant ainsi un signal combiné décodé (c₂), décodant en outre ledit signal combiné décodé (c₂) par un deuxième décodeur (D2) pour générer un premier signal d'informations estimé (m₂),
**caractérisé en ce que** ledit procédé comprend une étape de décodage dudit premier signal reçu (y₁) dans un troisième décodeur (D3), générant ainsi un premier signal reçu décodé (c₁) pour le délivrer en outre à un quatrième décodeur (D4) en vue de générer un deuxième signal d'informations estimé (m₁) et pour fournir une indication d'erreur (e₁) dudit premier signal reçu décodé, de sorte que dans le cas où l'indication d'erreur (e₁) est inférieure à une première limite prédéterminée (Emax), ledit deuxième signal d'informations estimé (m₁) est délivré, alors que dans le cas où l'indication d'erreur est égale ou supérieure à ladite première limite prédéterminée (Emax), ledit premier signal d'informations estimé (m₂) est délivré sous la forme d'un signal de sortie comprenant les informations extraites desdits au moins deux signaux reçus.

2. Procédé selon la revendication 1, selon lequel ledit premier décodeur (D1) et ledit troisième décodeur (D3) sont des décodeurs à correction d'erreur directe.

3. Procédé selon la revendication 1 ou 2, selon lequel ledit deuxième décodeur (D2) est un décodeur CRC.

4. Procédé selon l'une quelconque des revendications précédentes 1 à 3, selon lequel, pendant ladite deuxième étape de décodage par ledit deuxième décodeur (D2), une indication d'erreur (e₂) sur le premier signal d'informations estimé (m₂) est fournie, laquelle est en outre comparée avec une deuxième limite prédéterminée de sorte que ledit premier signal d'informations estimé (m2) est uniquement délivré en tant que signal de sortie dans le cas où ladite indication d'erreur (e₂) sur ledit premier signal d'informations estimé (m₂) se trouve au-dessous de ladite deuxième limite prédéterminée.

5. Procédé selon la revendication 4, selon lequel, dans le cas où l'indication d'erreur (e₂) sur ledit premier signal d'informations estimé (m₂) est égale ou supérieure à ladite deuxième limite prédéterminée, et dans le cas où l'indication d'erreur (e₁) sur ledit deuxième signal d'informations estimé (m₁) est égale ou supérieure à ladite première limite prédéterminée, un signal d'erreur de sortie est délivré en tant que signal de sortie.

6. Procédé d'extraction d'informations d'un premier signal reçu (y₁) et d'une pluralité d'autres signaux reçus (y₂, y₃..., y_{L}), **caractérisé en ce que** ledit procédé comprend les étapes selon la revendication 5 pour extraire des informations dudit premier signal reçu et d'un premier signal reçu (y₂) de ladite pluralité d'autres signaux reçus (y₂,..., y_{L}) et, pour chaque prochain signal reçu de ladite pluralité (y_{3,}...,y_{L}), ledit procédé comprend les étapes de stockage temporaire de tous les signaux reçus précédemment, jusqu'à la réception dudit prochain signal reçu, de combinaison correspondante dudit prochain signal reçu avec tous les signaux reçus précédemment, générant ainsi un prochain signal combiné (yCL), de décodage correspondant dudit prochain signal combiné dans un prochain décodeur correspondant (D1L), générant ainsi un prochain signal combiné décodé (c_{2L}), de décodage correspondant dudit prochain signal combiné décodé (c_{2L}) par un deuxième décodeur correspondant (D2L), fournissant ainsi un prochain signal estimé correspondant (m_{2L}) et une prochaine indication d'erreur correspondante (e_{L}), de comparaison de ladite prochaine indication d'erreur correspondante (e_{L}) avec une prochaine limite de seuil prédéterminée correspondante de sorte que lorsque la prochaine indication d'erreur correspondante (e_{L}) est inférieure à ladite prochaine limite de seuil prédéterminée correspondante, alors que l'indication d'erreur de sortie (e_{L-1}) sur le signal d'informations estimé précédent (m_{2(L-1)}) est égale ou supérieure à une limite de seuil prédéterminée précédente, ledit prochain signal d'informations estimé correspondant (m_{2L}) sera délivré, alors que dans le cas où l'indication d'erreur (e_{L-1}) du signal d'informations estimé précédent (m_{2(L-1)} était inférieure audit seuil prédéterminé précédemment, ledit signal d'informations estimé précédent (m_{2(L-1)}) sera délivré en tant que signal de sortie.

7. Arrangement (SC) pour extraire des informations d'un premier signal reçu (y₁) et d'un deuxième signal reçu (y₂), ledit arrangement (SC) incluant un tampon (B) pour le stockage temporaire dudit premier signal reçu (y₁), un combineur (C) pour combiner ledit premier signal reçu (y₁) et ledit deuxième signal reçu (y₂), pour délivrer ainsi un signal combiné (y), un premier décodeur (D1) pour décoder ledit signal combiné (y), délivrant ainsi un signal combiné décodé (c₂), un deuxième décodeur (D2) pour décoder en outre ledit signal combiné décodé (c₂) pour générer ainsi un premier signal d'informations estimé (m₂),
**caractérisé en ce que** ledit arrangement (SC) comprend en outre un troisième décodeur (D3) pour décoder ledit premier signal reçu (y₁), générant ainsi un premier signal reçu décodé (c₁), un quatrième décodeur (D4) pour délivrer un deuxième signal d'informations estimé (m₁) à partir dudit premier signal reçu décodé (c₁) et pour fournir une indication d'erreur (e₁) dudit premier signal reçu décodé, un dispositif de sortie de décision (T, SW1, SW2) étant adapté pour tester la valeur de ladite indication d'erreur (e₁) de sorte que dans le cas où l'indication d'erreur (e₁) est inférieure à une première limite prédéterminée (Emax), ledit dispositif de sortie de décision (T, SW1, SW2) est adapté pour délivrer ledit deuxième signal d'informations estimé (m₁) à la sortie du combineur de signal( SC), alors que dans le cas où l'indication d'erreur est égale ou supérieure à ladite première limite prédéterminée (Emax), ledit dispositif de sortie de décision (T, SW1, SW2) est adapté pour délivrer ledit premier signal d'informations estimé (m₂) sur une sortie (OUT) du combineur de signal (SC).

8. Arrangement (SC) selon la revendication 7, avec lequel ledit premier décodeur (D1) et ledit troisième décodeur (D3) sont des décodeurs à correction d'erreur directe.

9. Arrangement (SC) selon la revendication 7 ou 8, avec lequel ledit deuxième décodeur (D2) est un décodeur CRC.

10. Arrangement (SCa, SCb) selon l'une quelconque des revendications précédentes 7 à 9, avec lequel ledit deuxième décodeur (D2) est en outre adapté pour délivrer une indication d'erreur (e2) sur le premier signal d'informations estimé (m2) et avec lequel ledit dispositif de sortie de décision (T, SW1, SW2) est en outre adapté pour tester ladite indication d'erreur (e₂) sur le premier signal estimé de sorte que ledit premier signal d'informations estimé (m₂) est uniquement délivré à la sortie du combineur de signal dans le cas où ladite indication d'erreur sur ledit premier signal d'informations estimé se trouve au-dessous de ladite deuxième limite prédéterminée.

11. Arrangement (SCa, SCb) selon la revendication 10, avec lequel ledit dispositif de sortie de décision (T, SW1, SW2) est en outre adapté pour délivrer un signal d'erreur de sortie dans le cas où l'indication d'erreur (e₂) sur ledit premier signal d'informations estimé est égale ou supérieure à ladite deuxième limite prédéterminée, et dans le cas où l'indication d'erreur (e₁) sur ledit deuxième signal d'informations estimé est égale ou supérieure à ladite première limite prédéterminée.

12. Arrangement (SCa, SCb) selon la revendication 10, avec lequel ledit signal de sortie d'erreur est délivré à la sortie (OUT) du combineur dudit arrangement ou à une sortie supplémentaire (OUT2) dudit arrangement.

13. Arrangement multi-signal (SCL, SCLa, SCLb) pour extraire des informations d'un premier signal reçu (y₁) et d'une pluralité d'autres signaux reçus (y₂, y₃..., y_{L}), **caractérisé en ce que** ledit arrangement multi-signal comprend un arrangement selon la revendication 11 pour extraire des informations dudit premier signal reçu (y₁) et d'un premier (y₂) de ladite pluralité d'autres signaux reçus (y₂,...,y_{L}), ledit arrangement multi-signal comprenant en outre, pour chaque prochain signal reçu de ladite pluralité, au moins un tampon (BL1, BL2) correspondant pour stocker temporairement tous les signaux reçus précédemment, jusqu'à la réception dudit prochain signal reçu (y_{L}), un combineur multi-signal (CL) correspondant pour combiner ledit prochain signal reçu (y_{L}) avec tous les signaux reçus précédemment (y₂, y₃...,y_{L-1}), générant ainsi un prochain signal combiné (yCL), un prochain premier décodeur correspondant (D1L) pour décoder ledit prochain signal combiné, générant ainsi un prochain signal combiné décodé (c_{2L}), un prochain deuxième décodeur correspondant (D2L) pour le décodage correspondant dudit prochain signal combiné décodé (c_{2L}), fournissant ainsi un prochain signal d'informations estimé correspondant (m_{2L}) et une prochaine indication d'erreur correspondante (e_{L}), en vue de leur fourniture à un prochain dispositif de sortie de décision (TL, SW1L) qui est en outre adapté pour recevoir de la parti du dispositif de sortie de décision précédent (TL-1) un signal d'erreur de sortie précédent (t_{(L-1)2}) de sorte que, dans le cas où ledit signal d'erreur de sortie précédent (t_{(L-1)2}) indique que l'indication d'erreur (e_{(L-1)}) sur le signal d'informations estimé précédent (m_{2(L-1)}) est égale ou supérieure à une limite de seuil prédéterminée précédente alors que la prochaine indication d'erreur correspondante (e_{L}) est inférieure à un prochain seuil prédéterminé, ledit prochain signal d'informations estimé correspondant (m_{L}) sera délivré à la sortie (OUT) dudit arrangement multi-signal.

14. Arrangement selon l'une quelconque des revendications précédentes 7 à 12, comprenant en outre un module de contrôle qualité pour estimer un niveau de qualité dudit premier signal reçu (y₁), et des moyens d'inhibition pour, dans le cas où le niveau de qualité estimé dudit premier signal est supérieur à un seuil prédéterminé, inhiber la mise sous tension dudit premier tampon, dudit combineur, dudit premier décodeur et dudit deuxième décodeur.

15. Arrangement multi-signal (SCLP) selon la revendication 13, comprenant en outre au moins un module de contrôle qualité (QC1 ; QC2) pour estimer un niveau de qualité d'un signal reçu (y₁, y₂), ledit au moins un module de contrôle qualité étant connecté à au moins un moyen d'inhibition de l'alimentation électrique associé de sorte que, dans le cas où le niveau de qualité estimé dudit premier signal est supérieur à un seuil prédéterminé, ledit au moins un moyen d'inhibition de l'alimentation électrique mettra hors tension tous les prochains combineurs, tous les prochains premiers décodeurs, tous les prochains deuxièmes décodeurs.
